# EUROPÄISCHE PATENTANMELDUNG

(11) **EP 3 591 195 A1**
(43) Veröffentlichungstag der Anmeldung: **08.01.2020**
(21) Anmeldenummer: 18181921.0
(22) Anmeldetag: 05.07.2018
(51) Int. Cl.: F02C 7/08, F02C 6/04, F02C 6/18

(54) **ERWEITERTER GASTURBINENPROZESS MIT ERDGASREGASIFIZIERUNG**

(71) Anmelder: Siemens Aktiengesellschaft, 80333 München (DE)
(72) Erfinder: Graeber, Carsten, 91056 Erlangen (DE); Juretzek, Uwe, 91058 Erlangen (DE)

(57) **Zusammenfassung**

Die Erfindung betrifft eine Kraftwerksanlage (1) mit mehrstufigem, zwischengekühltem Verdichter (2), einer Brennkammer (3), einer der Brennkammer (3) nachgeschalteten Turbine (4), einer Verdichterluftleitung (5), die den Verdichter (2) mit der Brennkammer (3) verbindet und einen in die Verdichterluftleitung (5) und in eine von der Turbine (4) abzweigende Abgasleitung (6) geschalteteten ersten Wärmeübertrager (7), wobei ein erster Verdichterluftexpander (8) zwischen erstem Wärmeübertrager (7) und Brennkammer (3) in der Verdichterluftleitung (5) angeordnet ist, wobei die Kraftwerksanlage (1) eine Einrichtung (9) zur Regasifizierung flüssigen Erdgases mit einer Erdgasleitung (10) umfasst, wobei eine Wärmeübertragungseinrichtung (11) zwischen zwei Verdichterstufen (12) des Verdichters (2) und in die Erdgasleitung (10) geschaltet ist. Die Erfindung betrifft ferner ein Verfahren zum Betreiben einer solchen Kraftwerksanlage (1).

## Beschreibung

Die Erfindung betrifft eine Kraftwerksanlage sowie ein Verfahren zu deren Betrieb.

Üblicherweise wird flüssiges Erdgas (LNG [= liquid natural gas], -162°C) mit Umgebungswärme (beispielsweise Luft oder Meerwasser) oder chemischer Wärme verdampft. Alternativ wurden Konzepte entwickelt, die über kaskadierende ORC-Kreisläufe eine energetische Nutzung der Tieftemperaturkälte zum Ziel hatten.

Aufgabe der Erfindung ist es, eine Kraftwerksanlage bereitzustellen, die eine energetisch und wirtschaftlich verbesserte Verdampfung, insbesondere an den großen LNG-Terminals, ermöglicht und die zugleich möglichst einfach im Aufbau und kostengünstig ist. Eine weitere Aufgabe der Erfindung ist es, ein entsprechendes Verfahren zum Betrieb einer solchen Kraftwerksanlage anzugeben.

Die Erfindung löst die auf eine Kraftwerksanlage gerichtete Aufgabe, indem sie vorsieht, dass eine derartige Kraftwerksanlage mit mehrstufigem, zwischengekühltem Verdichter, einer Brennkammer, einer der Brennkammer nachgeschalteten Turbine, einer Verdichterluftleitung, die den Verdichter mit der Brennkammer verbindet, und einen in die Verdichterluftleitung und in eine von der Turbine abzweigende Abgasleitung geschalteten ersten Wärmeübertrager, wobei ein erster Verdichterluftexpander zwischen erstem Wärmeübertrager und Brennkammer in der Verdichterluftleitung angeordnet ist, eine Einrichtung zur Regasifizierung flüssigen Erdgases mit einer Erdgasleitung umfasst, wobei eine Wärmeübertragungseinrichtung zwischen zwei Verdichterstufen des Verdichters und in die Erdgasleitung geschaltet ist.

Durch Kopplung der LNG-Verdampfung an einen optimierten, rekuperierten Gasturbinen-Prozess wird es möglich, eine maximale Nutzung der Tieftemperaturkälte zur Stromerzeugung mit höchsten Wirkungsgraden und minimalen Kosten zu erreichen.
Ausschlaggebend ist hierbei eine optimale Prozessverschaltung mit reduzierter Anlagenkomplexität und einer minimalen Anzahl rotierender Komponenten.

In einer vorteilhaften Ausführungsform der Erfindung umfasst die Wärmeübertragungseinrichtung einen zweiten Wärmeübertrager, der zwischen zwei Verdichterstufen und in die Erdgasleitung geschaltet ist. Um die Kälte aus der LNG-Verdampfung in den eigentlichen Gasturbinen-Arbeitsprozess zu übertragen, wird der LNG-Strom direkt zur Zwischenkühlung der Luftverdichtung im rekuperierten Gasturbinen-Prozess genutzt. Eine maximale Kühlung in der Luftverdichtung resultiert in einer minimalen Leistungsanforderung des Verdichters d.h. einer signifikanten Erhöhung des Prozesswirkungsgrades. Dies ist umso wichtiger, da die Luftverdichtung bis auf einen deutlich höheren Druck erfolgt, als für den reinen Gasturbinen-Betrieb notwendig wäre, da ein zusätzliches Gefälle für den Heißluftexpander erzeugt werden muss. Mit dem Einsatz des zweiten Wärmeübertragers, der für eine Wärmeübertragung von verdichteter Luft auf das zu regasifizierende Erdgas sorgt - derartige Wärmeübertrager werden auch als Rekuperatoren bezeichnet -, ergeben sich aufgrund der geringen Aufwendungen auf der Materialseite Kosten- und Performancevorteile. Bei dieser Ausführungsform ist die LNG-Seite aber an den Arbeitskreislauf gekoppelt, was sicherheitstechnisch berücksichtig werden muss.

Um diesen Nachteil von vorneweg auszuschließen, sieht eine alternative vorteilhafte Ausführungsform vor, dass die Wärmeübertragungseinrichtung einen Stickstoffkreislauf mit einer Stickstoffleitung umfasst, in die ein dritter und ein vierter Wärmeübertrager geschaltet sind, wobei der dritte Wärmeübertrager zwischen zwei Verdichterstufen und der vierte Wärmeübertrager in die Erdgasleitung geschaltet ist. Bei dieser Ausführungsform wird der Stickstoff maximal gekühlt (< -120°C), um ihn dann als Kühlmedium für die Luftverdichtung des rekuperierten Gasturbinen-Prozesses zu nutzen. Der vorgeschlagene Stickstoffkreislauf als reiner Zwischenkreislauf ohne Arbeitsverrichtung (nur ein Umlaufgebläse) kann vorteilhaft so ausgelegt werden, dass der Stickstoffsystemdruck über dem LNG-Druck liegt, so dass bei möglichen Leckagen im LNG-Verdampfer sicherheitsunkritisch inerter Stickstoff auf die LNG-Seite übertritt.

Vorteilhafter Weise umfasst der Stickstoffkreislauf einen fünften Wärmeübertrager, der einerseits in Strömungsrichtung des Stickstoffs nach dem dritten und vor dem vierten Wärmeübertrager in die Stickstoffleitung und andererseits in die Abgasleitung geschaltet ist. Damit kann der bereits von der Verdichterluft erwärmte Stickstoff weiter erwärmt werden.

Weiterhin ist es vorteilhaft, wenn in die Erdgasleitung in Strömungsrichtung des Erdgases nach der Wärmeübertragungseinrichtung ein Erdgasexpander geschaltet ist, um einen maximalen Wirkungsgrad zu erreichen.

Dabei ist es zweckmäßig, wenn in die Erdgasleitung ein sechster Wärmeübertrager vor und ein siebter Wärmeübertrager nach dem Erdgasexpander angeordnet sind, um Erdgas vor und nach der Expansion aufzuwärmen. Die Wärme, die in den sechsten und siebten Wärmeübertragern auf das Erdgas übertragen wird, kann dabei als Niedertemperaturwärme aus der Kraftwerksanlage stammen, beispielsweise aus einem Schmierölkreislauf. Generell bieten sich alle Prozesswärmen bis ca. 150°C an, so dass dieses Konzept sein maximales Potenzial entfalten kann.

Es ist weiter zweckmäßig, wenn in die Erdgasleitung ein zwölfter Wärmeübertrager zwischen Wärmeübertragungseinrichtung und Erdgasexpander und in die Abgasleitung geschaltet ist. Mit diesem zwölften Wärmeübertrager kann weitere Wärme aus dem Abgas mit dem Erdgasexpander genutzt werden.

Es ist vorteilhaft, wenn die Kraftwerksanlage einen Wasser-Glykol-Kreislauf umfasst, mit einem achten Wärmeübertrager in einer Verdichteransaugluftleitung für die Kühlung und Trocknung der Verdichteransaugluft oder einem neunten Wärmeübertrager zwischen zwei Verdichterstufen zur Kühlung und Trocknung der Verdichterluft, mit einem zehnten Wärmeübertrager, der in die Verdichterluftleitung nach dem Verdichter zur Erwärmung der Verdichterluft geschaltet ist, einen elften Wärmeübertrager zur weiteren Erwärmung des regasifizierten Erdgases, und einen zwölften Wärmeübertrager zur Erwärmung eines Wasser-Glykol-Gemischs im Wasser-Glykol-Kreislauf.

Mit einem zusätzlichen Wasser-Glykol-Kreislauf kann eine optimale Wärmeverteilung im Prozess erreicht werden. Über diesen Kreislauf wird Wärme aus der Luftkühlung zu der noch relativ kalten Seite nach der Luftverdichtung bzw. auf den Stickstoffkreislauf vor Eintritt in den Abgaswärmeübertrager bzw. auf das kalte Erdgas übertragen. Zusätzlich kann der Wasser-Glykol-Kreislauf (der mit Temperaturen < 0°C betrieben wird) genutzt werden, um weitere Abwärmen z.B. aus dem Generatorkühler oder auch der Ansaugluftkühlung aufzunehmen und einer energetischen Verwendung im Gesamtprozess zuzuführen. Da die Luftkühlung je nach Anwendung bei Temperaturen < -100°C bzw. bis < -150°C erfolgen soll, ist es zwingend erforderlich, das in der Luft enthaltene Wasser vor der eigentlichen Tieftemperaturkühlung abzutrennen. Bevorzugt wird dabei nach einer ersten Verdichtung mit Hilfe des Wasser-Glykol-Kreislaufes der Wasseranteil auskondensiert. Alternative Verfahren der Wasser- / (CO₂)-Abtrennung sind ebenfalls möglich. Der elfte Wärmeübertrager zur weiteren Erwärmung des regasifizierten Erdgases kann entweder direkt in die Erdgasleitung, oder bei Vorhandensein eines Stickstoffkreislaufes auch in diesen geschaltet sein und das Erdgas indirekt über den Stickstoffkreislauf weiter erwärmen.

Durch den Einsatz des Verdichterluftexpanders kann die Abgaswärme maximal genutzt werden, da in diesem Fall für die Wärmeübertragung nur das Temperaturlimit des Expanders beachtet werden muss, welches signifikant über dem Temperaturlimit des nachfolgenden Gasturbinen-Bereichs (Brennkammer + Kühlluftsystem) liegt. Es ist daher vorteilhaft, wenn ein zweiter Verdichterluftexpander stromab des ersten Verdichterluftexpanders angeordnet ist und eingangsseitig mit der Verdichterluftleitung an einer Position hinter dem ersten Verdichterluftexpander verbunden ist und ausgangsseitig in die Abgasleitung mündet.

Die auf ein Verfahren gerichtete Aufgabe wird gelöst durch ein Verfahren zum Betreiben einer Kraftwerksanlage mit einem mehrstufigen, zwischengekühlten Verdichter, einer Brennkammer und einer Turbine, bei dem ein Austrittsdruck des Verdichters höher gewählt wird, als ein erforderlicher Turbineneintrittsdruck und bei dem die Verdichterluft vor der Verbrennung expandiert wird, bei dem flüssiges Erdgas mit bei der Verdichtung von Luft entstehender Wärme regasifiziert wird.

Aus Sicherheitsgründen kann es sinnvoll sein, wenn Wärme über einen zwischengeschalteten Stickstoffkreislauf von der Verdichterluft auf das Erdgas übertragen wird.

Zur weiteren Verbesserung des Prozesses ist es zweckmäßig, wenn flüssiges Erdgas auf Druck gebracht, regasifiziert und anschließend zur Energiegewinnung entspannt wird.

Dabei ist es vorteilhaft, wenn regasifiziertes Erdgas vor und nach der Entspannung durch eine weitere Wärmequelle erwärmt wird.

Schließlich ist es vorteilhaft, wenn mit Hilfe eines Wasser-Glykol-Kreislaufs Verdichteransaugluft gekühlt und getrocknet wird.

Die Erfindung weist mehrere Vorteile auf. Zum einen benötigt die Kraftwerksanlage nach der Erfindung für ihren Betrieb kein Zusatzwasser. Die Prozessstruktur ist vergleichsweise einfach und ermöglicht somit auch eine vergleichsweise einfache Regelung. Die erfinderische Kraftwerksanlage ist extrem kostengünstig, da nur eine minimale Anzahl von rotierenden Komponenten benötigt wird und sie bietet sicherheitstechnische Vorteile für die Einbindung in das LNG-System (wenige Schnittstellen, unproblematisches Leckagenhandling). Dabei ist die Konzeptperformance unabhängig vom LNG-Systemdruck. Je nach Ausführungsform lassen sich maximale Anlagenwirkungsgrade von bis zu 73% erreichen.

Die Erfindung wird beispielhaft anhand der Zeichnungen näher erläutert. Es zeigen schematisch und nicht maßstäblich:
- Figur 1: eine Kraftwerksanlage mit Stickstoffkreislauf,
- Figur 2: eine Kraftwerksanlage mit Erdgasexpander,
- Figur 3: eine Kraftwerksanlage ohne Stickstoffkreislauf und ohne Erdgasexpander,
- Figur 4: eine Kraftwerksanlage ohne Stickstoffkreislauf und mit Erdgasexpander,
- Figur 5: eine Kraftwerksanlage ohne Stickstoffkreislauf und ohne Wasser-Glykol-Kreislauf aber mit Erdgasexpander,
- Figur 6: eine Kraftwerksanlage mit zwei Luftexpandern und einem Erdgasexpander und
- Figur 7: eine Kraftwerksanlage mit zwei Luftexpandern aber ohne Erdgasexpander.

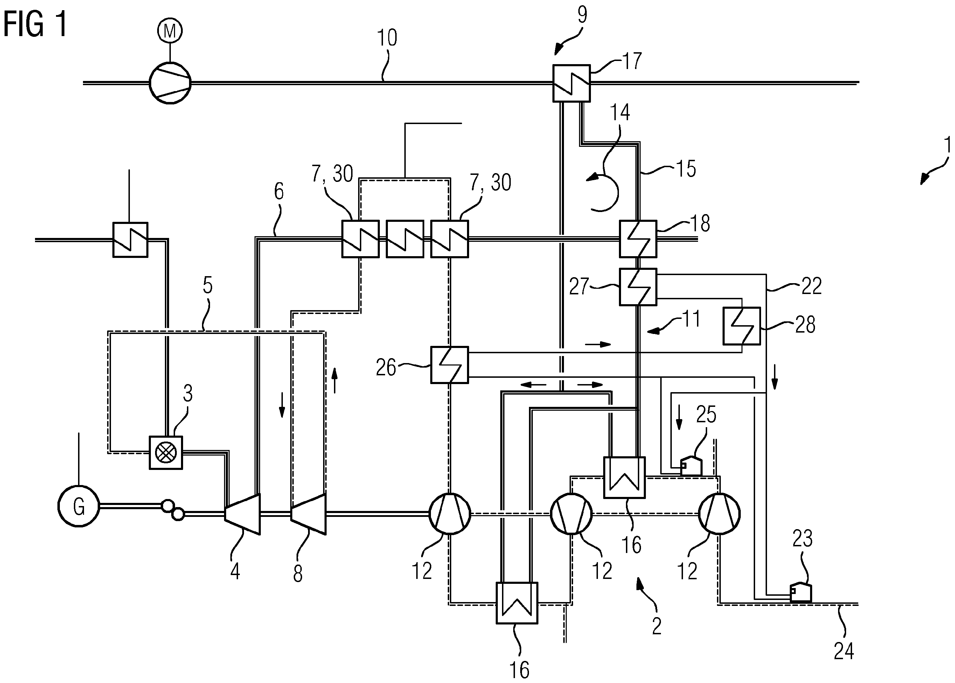

Die Figur 1 zeigt schematisch und beispielhaft eine Kraftwerksanlage 1 mit mehrstufigem, zwischengekühltem Verdichter 2, einer Brennkammer 3 und einer der Brennkammer 3 nachgeschalteten Turbine 4. Eine Verdichterluftleitung 5 verbindet den Verdichter 2 mit der Brennkammer 3 und eine Abgasleitung 6 zweigt von der Turbine 4 ab. Ein erster Wärmeübertrager 7 ist in die Verdichterluftleitung 5 und in die Abgasleitung 6 geschaltet. Er kann, wie in Figur 1 gezeigt, auch aus Wärmeübertragermodulen 30 aufgebaut sein. Dies ist dann sinnvoll, wenn, wie in Figur 1 angedeutet aber nicht näher bezeichnet, beispielsweise ein weiterer Wärmeübertrager oder eine andere Vorrichtung an dieser Stelle des Abgaspfades angeordnet werden soll. Ferner ist ein erster Verdichterluftexpander 8 zwischen erstem Wärmeübertrager 7 und Brennkammer 3 in der Verdichterluftleitung 5 angeordnet. Die Figur 1 zeigt ferner das erfindungsgemäße Merkmal, wonach die Kraftwerksanlage 1 eine Einrichtung 9 zur Regasifizierung flüssigen Erdgases mit einer Erdgasleitung 10 umfasst, wobei eine Wärmeübertragungseinrichtung 11 zwischen zwei Verdichterstufen 12 des Verdichters 2 und in die Erdgasleitung 10 geschaltet ist.

Dabei umfasst in der Ausführungsform der Figur 1 die Wärmeübertragungseinrichtung 11 einen Stickstoffkreislauf 14 mit einer Stickstoffleitung 15. In die Stickstoffleitung 15 sind ein dritter 16 und ein vierter Wärmeübertrager 17 geschaltet, wobei der dritte Wärmeübertrager 16 zwischen zwei Verdichterstufen 12 und der vierte Wärmeübertrager 17 in die Erdgasleitung 10 geschaltet ist. Mit diesen beiden Wärmeübertragern 16 und 17 kann der Stickstoffkreislauf 14 seine Funktion, die verdichtete Luft zu kühlen bzw. das flüssige Erdgas zu regasifizieren bereits erfüllen. Der Gesamtwirkungsgrad der Kraftwerksanlage 1 kann aber verbessert werden, wenn der Stickstoffkreislauf 14 ferner einen fünften Wärmeübertrager 18 umfasst, der einerseits in Strömungsrichtung des Stickstoffs nach dem dritten 16 und vor dem vierten Wärmeübertrager 17 in die Stickstoffleitung 15 und andererseits in die Abgasleitung 6 geschaltet ist, wo Abwärme aus dem Gasturbinenprozess für eine weitere Erwärmung des Stickstoffs genutzt werden kann.

Die Ausführungsform der Figur 1 umfasst ferner einen Wasser-Glykol-Kreislauf 22 mit einem achten Wärmeübertrager 23 in einer Verdichteransaugluftleitung 24 für die Kühlung und Trocknung der Verdichteransaugluft und einem neunten Wärmeübertrager 25 zwischen zwei Verdichterstufen 12 zur Kühlung und Trocknung der Verdichterluft, mit einem zehnten Wärmeübertrager 26, der in die Verdichterluftleitung 5 nach dem Verdichter 2 zur Erwärmung der Verdichterluft geschaltet ist, einen elften Wärmeübertrager 27, der zur indirekten Erwärmung des regasifizierten Erdgases in die Stickstoffleitung 15 des Stickstoff-Kreislaufs 14 geschaltet ist, und einen zwölften Wärmeübertrager 28 zur Erwärmung eines Wasser-Glykol-Gemischs im Wasser-Glykol-Kreislauf 22, bevor dieses Wärme an das Erdgas abgibt.

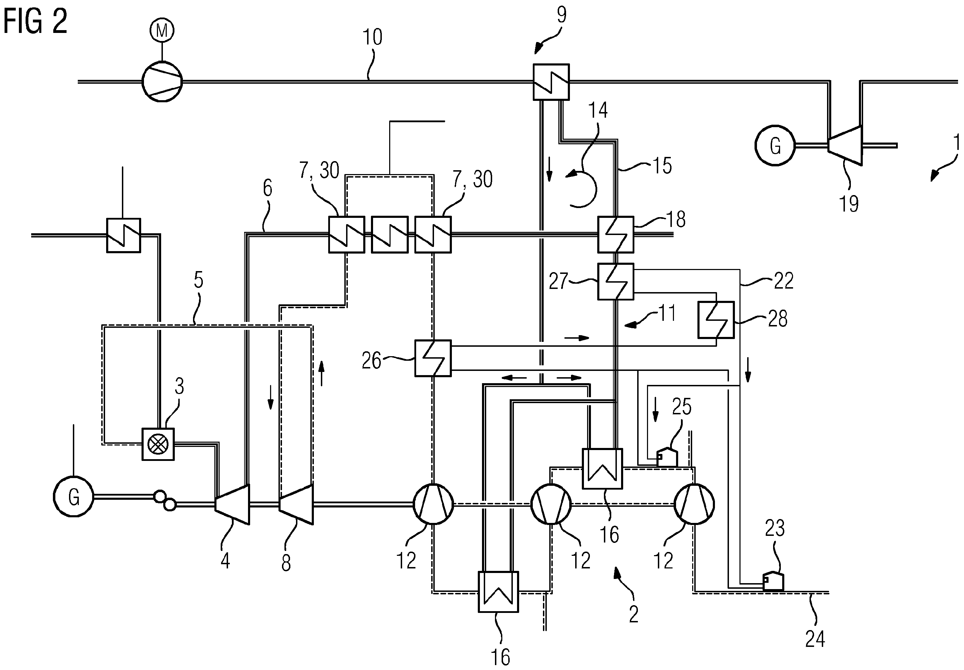

Figur 2 zeigt eine Ausführungsform, die zusätzlich zur Ausführungsform der Figur 1 einen in die Erdgasleitung 10 geschalteten Erdgasexpander 19 umfasst, der in Strömungsrichtung des Erdgases nach der Wärmeübertragungseinrichtung 11 in die Erdgasleitung 10 geschaltet ist. Durch diese Maßnahme wird zwar der Investitionsaufwand größer, aber auch der Wirkungsgrad der Gesamtanlage verbessert sich signifikant.

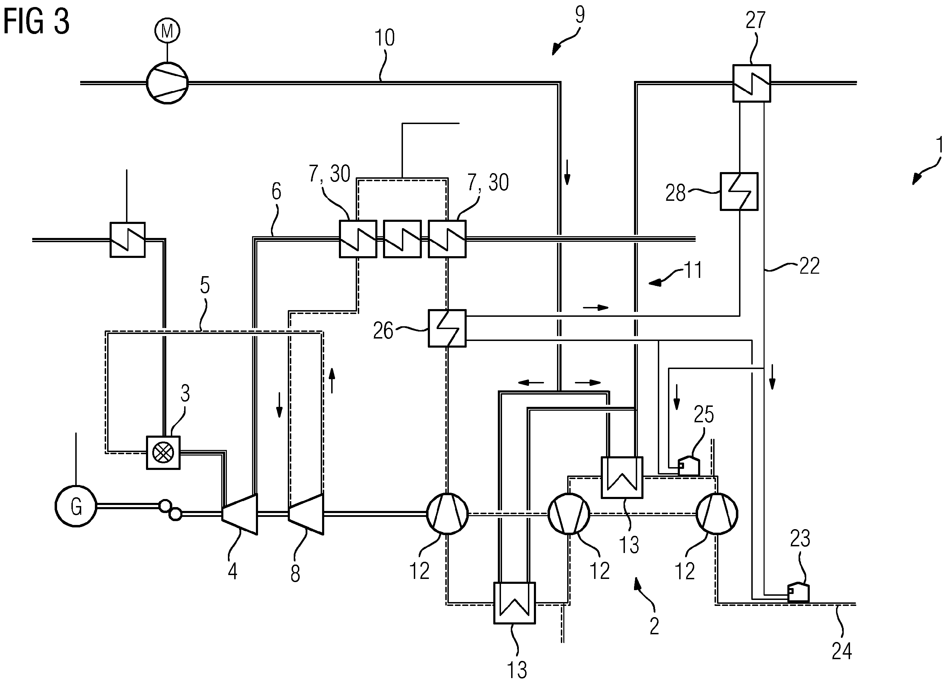

Figur 3 zeigt eine Ausführungsform der Kraftwerksanlage 1, die sich von der in der Figur 1 gezeigten dadurch unterscheidet, dass der Stickstoffkreislauf 14 entfällt und somit die Kraftwerksanlage 1 viel kompakter ausfällt und ihre Effizienz zunimmt, da keine Verluste über den Stickstoffkreislauf 14 anfallen. Figur 3 zeigt daher einen zweiten Wärmeübertrager 13, der zwischen zwei Verdichterstufen 12 und in die Erdgasleitung 10 geschaltet ist. Ferner unterscheidet sich die Ausführungsform der Figur 3 von den zuvor gezeigten dadurch, dass der elfte Wärmeübertrager 27 nun direkt in die Erdgasleitung 10 geschaltet ist und nicht mehr, wie in den vorhergehenden Ausführungsbeispielen, in die Stickstoffleitung 15.

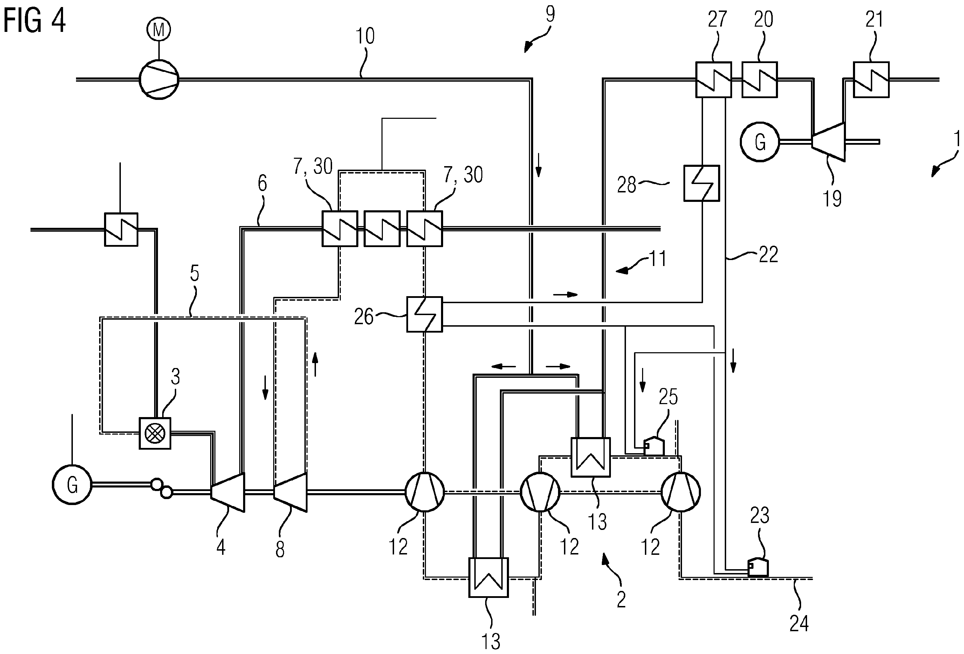

Entsprechend zeigt die Figur 4 eine Ausführungsform, die sich von der in der Figur 2 gezeigten im Wesentlichen durch den Wegfall des Stickstoffkreislaufs 14 unterscheidet. Wie die Figur 2 weist sie einen Erdgasexpander 19 auf. Ferner sind in der Figur 4 in der Erdgasleitung 10 ein sechster Wärmeübertrager 20 vor und ein siebter Wärmeübertrager 21 nach dem Erdgasexpander 19 angeordnet, um Erdgas vor und nach der Expansion zusätzlich aufzuwärmen. Der sechste Wärmeübertrager 20 sorgt für eine weitere Erwärmung des Erdgases vor der Entspannung, so dass der Nutzen der Entspannung gesteigert wird. Der siebte Wärmeübertrager 21 erwärmt das bei der Entspannung abgekühlte Erdgas und bringt es auf eine netztaugliche Temperatur.

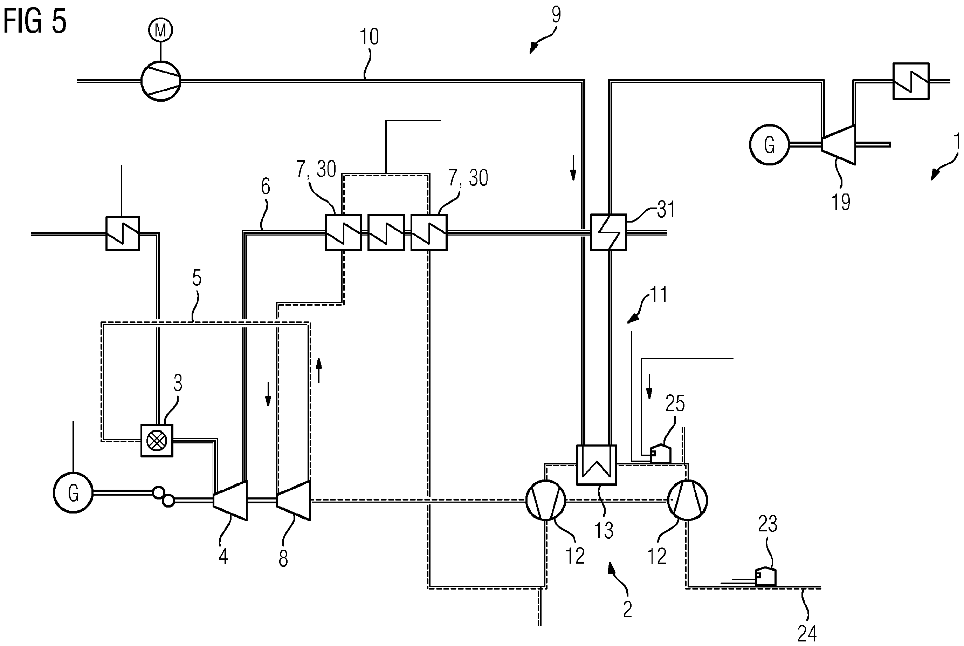

Figur 5 zeigt eine Kraftwerksanlage 1 ohne Stickstoffkreislauf 14 und ohne Wasser-Glykol-Kreislauf 22 aber mit Erdgasexpander 19. Die Investitionskosten sind vergleichsweise gering. Es treten keine Wirkungsgradverluste über einen Stickstoffkreislauf 14 auf. Die Anlageneffizienz ist hoch, u.a. wegen des Erdgasexpanders 19. Ein zwölfter Wärmeübertrager 31, der sowohl in die Erdgasleitung 10 als auch in die Abgasleitung 6 geschaltet ist, ermöglicht es, noch verfügbare Abgaswärme über den Erdgasexpander 19 nutzbringend einzusetzen.

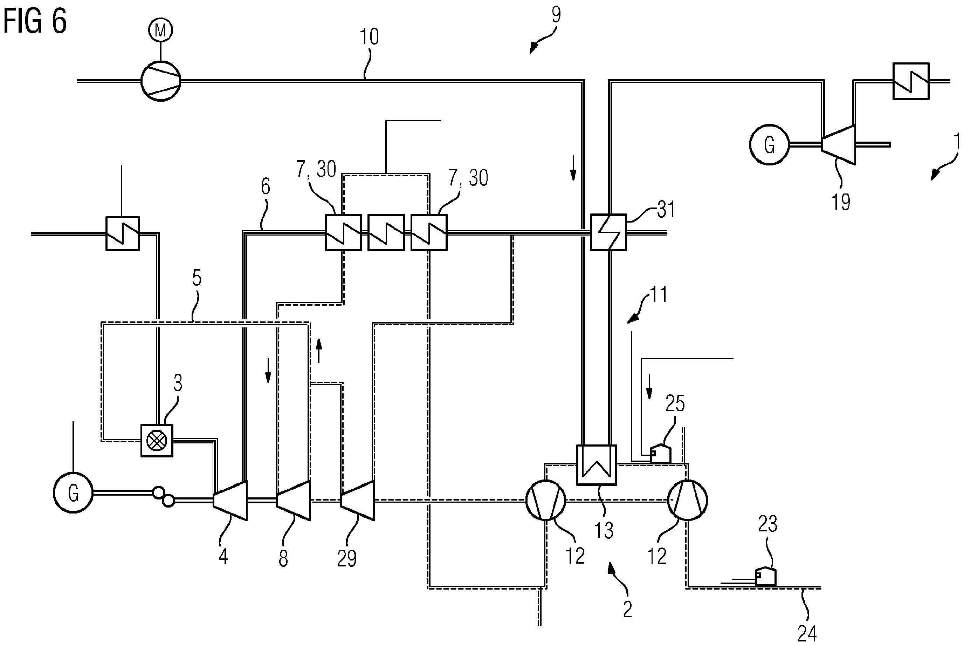

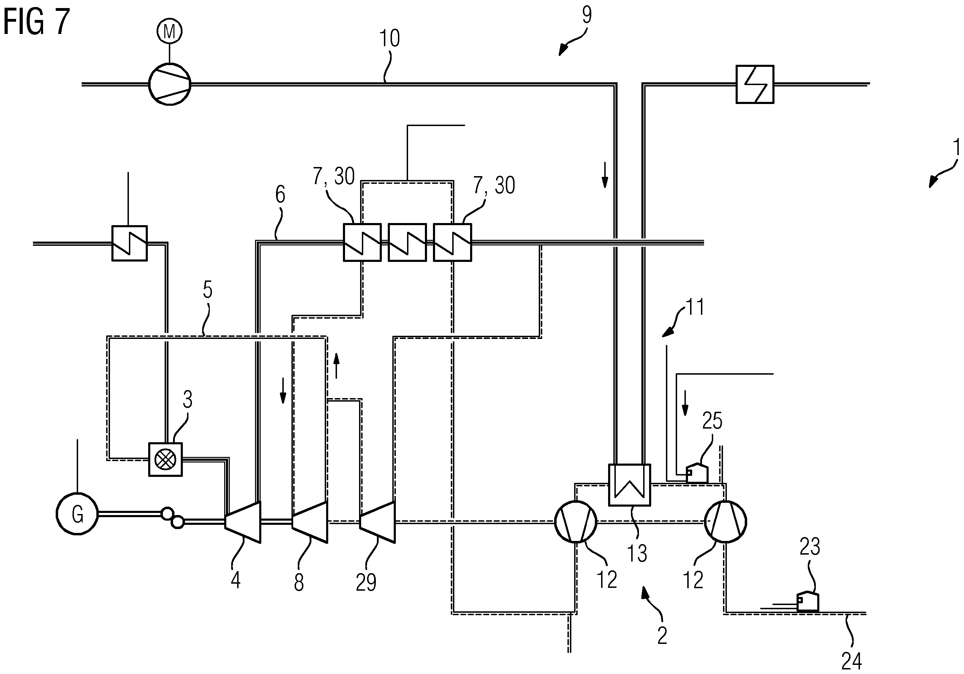

Eine weitere Steigerung der Nutzung verfügbarer Wärme zeigen die Figuren 6 und 7. Die beiden Ausführungsformen umfassen zusätzlich zu dem bisher gezeigten einen zweiten Verdichterluftexpander 29, der den Teil der Luft, die nicht der Verbrennung zugeführt wird, weiter zur Gewinnung elektrischer Energie entspannt, wobei die entspannte Luft in die Abgasleitung 6 abgegeben wird. Die Ausführungsformen der Figuren 6 und 7 unterscheiden sich lediglich darin, dass in der Figur 6 noch der Erdgasexpander 19 in der Erdgasleitung 10 vorgesehen ist und in der Figur 7 auf ihn verzichtet wird, so dass die Ausführungsform der Figur 7 als im Hinblick auf reduzierte Anlagenkomplexität optimierte Variante der Erfindung gesehen werden kann, ohne Zwischenkreisläufe und ohne zusätzliche rotierende Komponenten in brenngasführenden Leitungen.

## Patentansprüche

1. Kraftwerksanlage (1) mit mehrstufigem, zwischengekühltem Verdichter (2), einer Brennkammer (3), einer der Brennkammer (3) nachgeschalteten Turbine (4), einer Verdichterluftleitung (5), die den Verdichter (2) mit der Brennkammer (3) verbindet und einen in die Verdichterluftleitung (5) und in eine von der Turbine (4) abzweigende Abgasleitung (6) geschalteten ersten Wärmeübertrager (7), wobei ein erster Verdichterluftexpander (8) zwischen erstem Wärmeübertrager (7) und Brennkammer (3) in der Verdichterluftleitung (5) angeordnet ist, **dadurch gekennzeichnet, dass** die Kraftwerksanlage (1) eine Einrichtung (9) zur Regasifizierung flüssigen Erdgases mit einer Erdgasleitung (10) umfasst, wobei eine Wärmeübertragungseinrichtung (11) zwischen zwei Verdichterstufen (12) des Verdichters (2) und in die Erdgasleitung (10) geschaltet ist.

2. Kraftwerksanlage (1) nach Anspruch 1, wobei die Wärmeübertragungseinrichtung (11) einen zweiten Wärmeübertrager (13) umfasst, der zwischen zwei Verdichterstufen (12) und in die Erdgasleitung (10) geschaltet ist.

3. Kraftwerksanlage (1) nach Anspruch 1, wobei die Wärmeübertragungseinrichtung (11) einen Stickstoffkreislauf (14) mit einer Stickstoffleitung (15) umfasst, in die ein dritter (16) und ein vierter Wärmeübertrager (17) geschaltet sind, wobei der dritte Wärmeübertrager (16) zwischen zwei Verdichterstufen (12) und der vierte Wärmeübertrager (17) in die Erdgasleitung (10) geschaltet ist.

4. Kraftwerksanlage (1) nach Anspruch 3, wobei der Stickstoffkreislauf (14) einen fünften Wärmeübertrager (18) umfasst, der einerseits in Strömungsrichtung des Stickstoffs nach dem dritten (16) und vor dem vierten Wärmeübertrager (17) in die Stickstoffleitung (15) und andererseits in die Abgasleitung (6) geschaltet ist.

5. Kraftwerksanlage (1) nach einem der vorhergehenden Ansprüche, wobei in die Erdgasleitung (10) in Strömungsrichtung des Erdgases nach der Wärmeübertragungseinrichtung (11) ein Erdgasexpander (19) geschaltet ist.

6. Kraftwerksanlage (1) nach Anspruch 5, wobei in die Erdgasleitung (10) ein sechster Wärmeübertrager (20) vor und ein siebter Wärmeübertrager (21) nach dem Erdgasexpander (19) angeordnet sind, um Erdgas vor und nach der Expansion aufzuwärmen.

7. Kraftwerksanlage (1) nach Anspruch 5, wobei in die Erdgasleitung (10) ein zwölfter Wärmeübertrager (31) zwischen Wärmeübertragungseinrichtung (11) und Erdgasexpander (19) und in die Abgasleitung (6) geschaltet ist.

8. Kraftwerksanlage (19) nach einem der vorhergehenden Ansprüche, ferner umfassend einen Wasser-Glykol-Kreislauf (22) mit einem achten Wärmeübertrager (23) in einer Verdichteransaugluftleitung (24) für die Kühlung und Trocknung der Verdichteransaugluft oder einem neunten Wärmeübertrager (25) zwischen zwei Verdichterstufen (12) zur Kühlung und Trocknung der Verdichterluft, mit einem zehnten Wärmeübertrager (26), der in die Verdichterluftleitung (5) nach dem Verdichter (2) zur Erwärmung der Verdichterluft geschaltet ist, einen elften Wärmeübertrager (27) zur weiteren Erwärmung des regasifizierten Erdgases, und einen zwölften Wärmeübertrager (28) zur Erwärmung eines Wasser-Glykol-Gemischs im Wasser-Glykol-Kreislauf (22).

9. Kraftwerksanlage (1) nach einem der vorhergehenden Ansprüche, wobei ein zweiter Verdichterluftexpander (29) stromab des ersten Verdichterluftexpanders (8) angeordnet ist und eingangsseitig mit der Verdichterluftleitung (5) an einer Position hinter dem ersten Verdichterluftexpander (8) verbunden ist und ausgangsseitig in die Abgasleitung (6) mündet.

10. Verfahren zum Betreiben einer Kraftwerksanlage (1) mit einem mehrstufigen, zwischengekühlten Verdichter (2), einer Brennkammer (3) und einer Turbine (4), bei dem ein Austrittsdruck des Verdichters (2) höher gewählt wird, als ein erforderlicher Turbineneintrittsdruck und bei dem die Verdichterluft vor der Verbrennung expandiert wird, **dadurch gekennzeichnet, dass** flüssiges Erdgas mit bei der Verdichtung von Luft entstehender Wärme regasifiziert wird.

11. Verfahren nach Anspruch 10, wobei die Wärme über einen zwischengeschalteten Stickstoffkreislauf (14) von der Verdichterluft auf das Erdgas übertragen wird.

12. Verfahren nach einem der Ansprüche 10 oder 11, wobei flüssiges Erdgas auf Druck gebracht, regasifiziert und anschließend zur Energiegewinnung entspannt wird.

13. Verfahren nach Anspruch 12, wobei regasifiziertes Erdgas vor und nach der Entspannung durch eine weitere Wärmequelle erwärmt wird.

14. Verfahren nach einem der Ansprüche 10 bis 13, wobei mit Hilfe eines Wasser-Glykol-Kreislaufs (22) Verdichteransaugluft gekühlt und getrocknet wird.
